# EUROPEAN PATENT SPECIFICATION

(11) **EP 1 281 625 B1**
(45) Date of publication and mention of the grant of the patent: **18.08.2004**
(21) Application number: 02014507.4
(22) Date of filing: 01.07.2002
(51) Int. Cl.: B65D 33/01, B31B 1/74

(54) **Method for making a bag or bag-forming material for vacuum preservation of articles**
Verfahren zur Herstellung eines Beutels oder Beutelmaterials zur Vakuumverpackung von Gegenständen
Procédé de fabrication d'un sac ou materiau de sac pour le conditionnement d'articles sous vide

(30) Priority: 03.08.2001 IT TO20010772
(43) Date of publication of application: 05.02.2003
(73) Proprietor: Nuova Poliver di Oddone Colomba & C. S.n.c., 15070 Tagliolo Monferrato (AL) (IT)
(72) Inventor: Malaspina, Alberto, 15076 Ovada (AL) (IT)
(74) Representative: Spandonari, Carlo

(56) References cited:
- EP-A- 0 648 688
- JP-A- 6 001 358
- JP-A- 10 081 344
- JP-A- 56 013 362
- US-A- 3 340 089

## Description

This invention relates to a method for making a bag of a synthetic material according to the preamble of claim 1 for the vacuum preservation of articles, particularly foodstuffs in the home. The invention also relates to a method of making a tube according to the preamble of claim 14. Nowadays, bags are widely used in the home for protection and preservation of vegetables, meat, cheese and other foodstuffs in refrigerators. These bags consist of two walls of a synthetic material, joined by weldings along three edges. The walls are generally multi-layer sheets made of polyethylene, which material is compatible with foodstuffs but is permeable to gases. Such bags are generally closed by means of knots, clips or the like.

Recently, the practice has become widespread of creating a vacuum in the bag containing the foodstuffs, in order to improve the preservation of foodstuffs subjected to a high risk of deterioration. The walls of the bags (which are welded along three edges) consist of several layers of different materials comprising an inner layer of polyethylene, which material is compatible with foodstuffs but permeable to gases, and a layer of a material that is impermeable to gases, such as polyamide. Therefore, the air is extracted from the bag by means of a vacuum bell, then the bag is hermetically sealed also along the fourth edge defining the mouth, by means of a hot weld.

Such operation cannot be performed in the home, because the air extraction is hindered by the mutual adhesion of the inner surfaces of the bag, which will prevent its areas which are far from the mouth from being completely emptied, and will allow air pockets to survive. Successively, such pockets will spread all over the bag so that the purpose of preventing contact between the foodstuffs and the air will not be achieved.

US-A-3 340 089 proposes incorporating spaced, hard particles, such as crystalline particles of common salt, in the wax-type coating of a wrapping sheet material, so that the particles project from the coating, in order to prevent adhesion between adjacent layers of the wrapping material during vacuum-packing.

More recently, EP-A-0 648 688 proposes to apply protruding thread-like elements to the internal surfaces of the walls of a bag, in order to define channels for the escape of air during vacuum-packing, although the document does not teach how to effect bonding between the thread-like elements and the sheet.

Similarly, JP 10-81344 teaches to provide embossed crests on the walls of the bag to form a network of grooves, so that the air will be always allowed to find a way towards the mouth, where suction takes place.

All the above proposals involve relatively expensive extra operations in the manufacture of the bag. In the case of US-A-3 340 089, the particles of salt are incorporated in a wax coating whose basic purpose was to form a vapor barrier. However, nowadays vapor barriers are obtained by forming multi-layer sheets in which at least one layer is airtight. The treatments proposed in EP-A-0 648 688 and JP 10-81344 both require high precision and appear to involve sophisticated, adhoc machinery, which considerably increases the cost of the bag.

The main object of the present invention is therefore to provide a method for making a bag of a synthetic material for vacuum preserving foodstuffs, which will avoid the drawback of the trapped air pockets and which, at the same time, has low manufacturing costs, i.e. substantially similar to the costs of conventional bags.

Another object of the invention is to provide a bag having a high flexibility and shape adaptability with respect to the article contained in it.

A further object of the invention is to provide the above method so that a bag can be manufactured on conventional assembly lines, without a need for complex extra equipments.

The above-mentioned objects and advantages, and other that will become apparent below, are achieved by the invention with method for making a bag of a synthetic material having the features recited in claim 1 and by a method of making a tube as defined in claim 14, while the dependent claims state other advantageous features.

The invention will now be described in more detail, with reference to some preferred but not exclusive embodiments shown by way of non limiting example in the attached drawings, wherein:
Fig. 1 is a perspective view of a bag made according to a first preferred embodiment of the invention;
Fig. 2 diagrammatically shows a process for manufacturing the bag according to the invention;
Fig. 3 is a perspective view of a second embodiment of a bag according to the invention.

With reference to the Figures, a bag 10 has two walls 12, 14 which are hot welded along a peripheral line 20. Each wall is made of a multi-layer synthetic material known per se, consisting of three or more alternating layers of polyamide and polyethylene. The inmost layer is usually made of polyethylene, which material is compatible with foodstuffs and is easy to weld, while one or more of the remaining layers are made of polyamide, which imparts the bag a high mechanical strength and provides it with an effective air leak barrier.

According to the invention, at least wall 12 has three hot-printed, rough stripes 16a, 16b, 16c on its inner surface, which are substantially rectilinear and extend longitudinally, preferably over the full length of the bag.

Although the number of three rough stripes is the most advantageous for bags having common sizes (e.g. about 20 cm x 30 cm), their number can be changed, two stripes or only a single stripe being sufficient in the case of long and narrow bags. Also the width of each stripe can be changed, preferably in the range 0.5 cm to 2 cm.

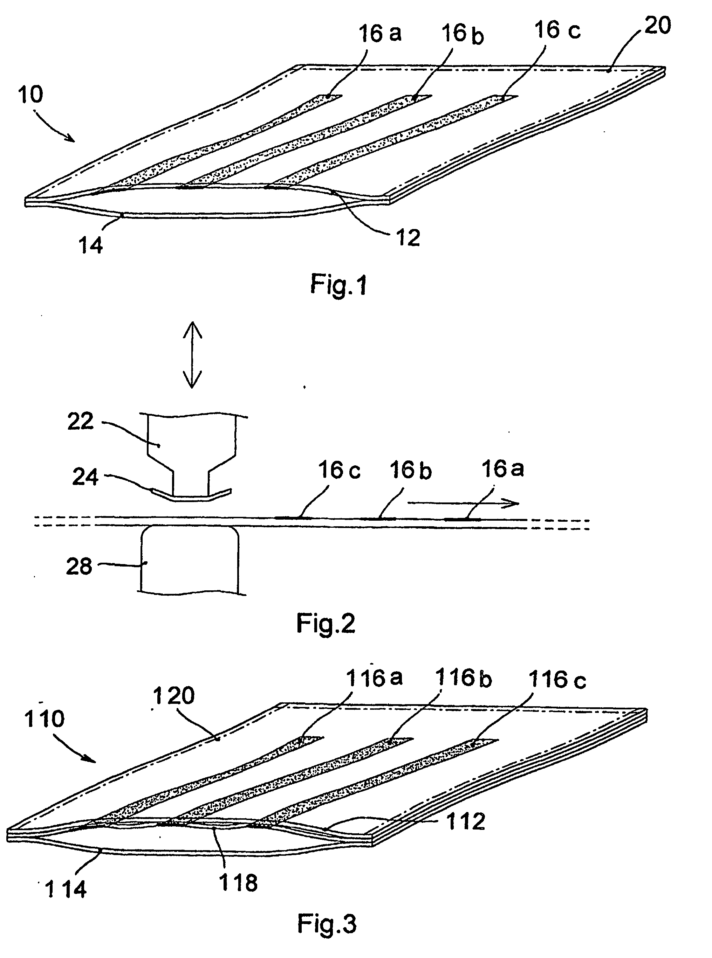

The stripe can be printed, as shown in Fig. 2, by pressing the wall between a welding bar 22, having a welding surface coated with a rough, non-adhesive material 24 such as a close-mesh teflon cloth, and a smooth counterbar 28. The teflon cloth preferably has 5 to 20 meshes/cm, and more preferably 12 meshes/cm.

In a second embodiment of the bag, shown in Fig. 3, a single-layer, a polyethylene sheet 118 is coupled to wall 112 of the bag, and is joined to wall 112 by means of three rough stripes 116a, 116b, 116c similar to rough stripes 16a, 16b, 16c. The hot imprints forming the stripes are obtained by welding a single-layer sheet 118 to multi-layer sheet 112. Such stripes (the two sheets being welded along them) can be obtained by using the same welding bar (coated with a rough, non-adhesive material) shown with reference to the preferred embodiment.

This approach provides an increased protection of the outer walls against possible micro-fissures which could arise during the impact of the welding bar, particularly in the case of very thin walls and/or walls with only few polyamide layers.

The rough stripes have been found to effectively prevent sticking or adherence between parts of the bag, and therefore forming of air pockets. Such bags can be made by an easy and cheap process, which is simple to be executed on a conventional plant for mass production of conventional bags.

Moreover, since teflon, as well as welding bars, are commonly used for making the peripheral weldings of the walls, the process uses devices, materials and technologies that are common and well known in the field.

A further advantage of the invention is that the stripes do not significantly stiffen the wall of the bag, which therefore retains a high flexibility and shape adaptability with respect to the article contained in it.

The preferred embodiments of the invention which have been described above can be changed in different ways, as will be evident for the person skilled in the art, and particularly the materials and the sizes can be varied.

For example, although the stripe is preferably rectilinear, it may be differently shaped, e.g. S-shaped. Similarly, the stripe may extend only over a longitudinal portion of the bag, rather than over its full length. Materials and sizes can be different from what has been shown, depending on requirements.

Instead of a bag sealed at one end, a bag-forming material may also be marketed, similar to the above described bag, i.e. comprising a tube made of two elongated walls welded together at opposite sides, one of the wall being hot-printed as taught above. A roll of 5 to 10 meters of such a tube is provided to the user, who will cut a desired length of the tube and seal it at one end to form the bag, then at the opposite end after insertion of an article and extraction of air.

## Claims

1. A method for making a bag of a synthetic material for vacuum preservation of foodstuffs, comprising the step of joining two walls (12, 14) along a peripheral welding line, **characterized in that** it comprises a step of hot-printing at least one longitudinally extending rough stripe (16a, 16b, 16c; 116a, 116b, 116c) on the inner surface of at least one of said walls (12).

2. The method of claim 1, **characterized in that** said at least one rough stripe (16a, 16b, 16c; 116a, 116b, 116c) extends substantially along the full length of the bag.

3. The method of claim 1, **characterized in that** said at least one rough stripe (16a, 16b, 16c; 116a, 116b, 116c) is substantially rectilinear.

4. The method of claim 1, **characterized in that** said at least one wall (12) is provided with three of said rough stripes (16a, 16b, 16c; 116a, 116b, 116c).

5. The method of claim 1, **characterized in that** said at least one rough stripe (16a, 16b, 16c; 116a, 116b, 116c) is obtained by pressing a welding bar (22) having a welding surface coated with a rough, non-adhesive material (24), against the inner surface of said at least one wall (12).

6. The method of claim 5, **characterized in that** said rough, non-adhesive material is a teflon cloth (24).

7. The method of claim 6, **characterized in that** said teflon cloth (24) has 5 to 20 meshes/cm.

8. The method of claim 6, **characterized in that** said teflon cloth (24) has 12 meshes/cm.

9. The method of claim 1, **characterized in that** the wall (12) provided with rough stripes (16a, 16b, 16c; 116a, 116b, 116c) consists of a multi-layer sheet in which at least the most internal layer is compatible with foodstuffs.

10. The method of claim 9, **characterized in that** said most internal layer is made of polyethylene.

11. The method of claim 1, **characterized in that** the wall (12) provided with rough stripes (16a, 16b, 16c; 116a, 116b, 116c) comprises an outer, multi-layer sheet (112) and an inner, single-layer sheet (118) made of a food-compatible material.

12. The method of claim 11, **characterized in that** said inner, single-layer sheet (118) is polyethylene.

13. The method of claim 11, **characterized in that** said single-layer sheet (118) is welded to the multi-layer sheet (112) along the rough stripes.

14. A method for making a tube of a synthetic material for preservation of articles, comprising the step of joining two walls (12, 14) along opposite lateral welding lines, **characterized in that** it comprises a step of hot-printing at least one longitudinally extending rough stripe (16a, 16b, 16c) on the inner surface of at least one of said walls (12).

## Patentansprüche

1. Verfahren zur Herstellung eines Beutels aus synthetischem Material zur Vakuumaufbewahrung von Nahrungsmitteln, umfassend den Schritt des Verbindens von zwei Wänden (12, 14) entlang einer Randschweißbahn, **dadurch gekennzeichnet, dass** es einen Schritt des Heißdruckens von mindestens einem, sich in Längsrichtung erstreckenden, rauen Streifens (16a, 16b, 16c; 116a, 116b, 116c) auf die innere Oberfläche mindestens einer der Wände (12) umfasst.

2. Verfahren gemäß Anspruch 1, **dadurch gekennzeichnet, dass** der mindestens eine raue Streifen (16a, 16b, 16c; 116a, 116b, 116c) sich im Wesentlichen über die volle Länge des Beutels erstreckt.

3. Verfahren gemäß Anspruch 1, **dadurch gekennzeichnet, dass** der mindestens eine raue Streifen (16a, 16b, 16c; 116a, 116b, 116c) im Wesentlichen geradlinig ist.

4. Verfahren gemäß Anspruch 1, **dadurch gekennzeichnet, dass** die mindestens eine Wand (12) mit drei der rauen Streifen (16a, 16b, 16c; 116a, 116b, 116c) versehen ist.

5. Verfahren gemäß Anspruch 1, **dadurch gekennzeichnet, dass** der mindestens eine raue Streifen (16a, 16b, 16c; 116a, 116b, 116c) durch Pressen eines Schweißstabes (22) mit einer Schweißoberfläche, die mit einem rauen nicht anhaftenden Material (24) beschichtet ist, gegen die innere Seite mindestens einer Wand (12) erhalten wird.

6. Verfahren gemäß Anspruch 5, **dadurch gekennzeichnet, dass** das nicht anhaftende Material ein Teflongewebe (24) ist.

7. Verfahren gemäß Anspruch 6, **dadurch gekennzeichnet, dass** das Teflongewebe (24) 5 bis 20 Maschen/cm hat.

8. Verfahren gemäß Anspruch 6, **dadurch gekennzeichnet, dass** das Teflongewebe (24) 12 Maschen/cm hat.

9. Verfahren gemäß Anspruch 1, **dadurch gekennzeichnet, dass** die mit rauen Streifen (16a, 16b, 16c; 116a, 116b, 116c) versehene Wand (12) aus einer Mehrschichtfolienbahn, bei welcher wenigstens die am weitesten innen liegende Schicht für Nahrungsmittel verträglich ist, besteht.

10. Verfahren gemäß Anspruch 9, **dadurch gekennzeichnet, dass** die am weitesten innen liegende Schicht aus Polyethylen hergestellt ist.

11. Verfahren gemäß Anspruch 1, **dadurch gekennzeichnet, dass** die mit rauen Streifen (16a, 16b, 16c; 116a, 116b, 116c) versehene Wand (12) eine äußere Mehrschichtfolienbahn (112) und eine innere, aus einem nahrungsmittelverträglichen Material hergestellte Einzelschichtfolienbahn (118) umfasst.

12. Verfahren gemäß Anspruch 11, **dadurch gekennzeichnet, dass** die innere Einzelschichtfolienbahn (118) Polyethylen ist.

13. Verfahren gemäß Anspruch 11, **dadurch gekennzeichnet, dass** die Einzelschichtfolienbahn (118) an die Mehrschichtfolienbahn (112) entlang der rauen Streifen angeschweißt ist.

14. Verfahren zur Herstellung eines Schlauches aus synthetischem Material zur Aufbewahrung von Gegenständen, umfassend den Schritt des Verbindens zweier Wände (12, 14) entlang gegenüberliegender seitlicher Schweißnähte, **dadurch gekennzeichnet, dass** es einen Schritt des Heißdruckens von mindestens einem, sich in Längsrichtung erstreckenden rauen Streifen (16a, 16b, 16c) auf die innere Oberfläche von mindestens einer der Wände (12) umfasst.

## Revendications

1. Procédé de fabrication d'un sac en matériau synthétique pour le conditionnement sous vide de denrées alimentaires, comprenant l'étape consistant à joindre deux parois (12, 14) le long d'une ligne de soudage périphérique, **caractérisé en ce qu'**il comprend une étape consistant à imprimer à chaud au moins une bande rugueuse s'étendant longitudinalement (16a, 16b, 16c ; 116a, 116b, 116c) sur la surface intérieure d'au moins l'une desdites parois (12),

2. Procédé selon la revendication 1, **caractérisé en ce que** ladite au moins une bande rugueuse (16a, 16b, 16c ; 116a, 116b, 116c) s'étend sensiblement sur toute la longueur du sac.

3. Procédé selon la revendication 1, **caractérisé en ce que** ladite au moins une bande rugueuse (16a, 16b, 16c ; 116a, 116b, 116c) est sensiblement rectiligne.

4. Procédé selon la revendication 1, **caractérisé en ce que** ladite au moins une paroi (12) est munie de trois desdites bandes rugueuses (16a, 16b, 16c ; 116a, 116b, 116c).

5. Procédé selon la revendication 1, **caractérisé en ce que** ladite au moins une bande rugueuse (16a, 16b, 16c ; 116a, 116b, 116c) est obtenue en pressant une barre de soudage (22) ayant une surface de soudage revêtue d'un matériau rugueux non adhésif (24) contre la surface intérieure de ladite au moins une paroi (12).

6. Procédé selon la revendication 5, **caractérisé en ce que** ledit matériau rugueux non adhésif est un tissu de téflon (24).

7. Procédé selon la revendication 6, **caractérisé en ce que** ledit tissu de téflon (24) comporte 5 à 20 mailles/cm.

8. Procédé selon la revendication 6, **caractérisé en ce que** ledit tissu de téflon (24) comporte 12 mailles/cm.

9. Procédé selon la revendication 1, **caractérisé en ce que** la paroi (12) munie de bandes rugueuses (16a, 16b, 16c ; 116a, 116b, 116c) est constituée d'une feuille multicouche dans laquelle au moins la couche la plus intérieure est compatible avec les denrées alimentaires.

10. Procédé selon la revendication 9, **caractérisé en ce que** ladite couche la plus intérieure est constituée de polyéthylène.

11. Procédé selon la revendication 1, **caractérisé en ce que** la paroi (12) munie de bandes rugueuses (16a, 16b, 16c ; 116a, 116b, 116c) comprend une feuille extérieure multicouche (112) et une feuille intérieure monocouche (118) fabriquée dans un matériau compatible avec les aliments.

12. Procédé selon la revendication 11, **caractérisé en ce que** ladite feuille intérieure monocouche (118) est en polyéthylène.

13. Procédé selon la revendication 11, **caractérisé en ce que** ladite feuille monocouche (118) est soudée à la feuille multicouche (112) le long des bandes rugueuses.

14. Procédé de fabrication d'un tube en matériau synthétique pour le conditionnement d'articles, comprenant l'étape consistant à joindre deux parois (12, 14) le long de lignes de soudage latérales opposées, **caractérisé en ce qu'**il comprend une étape consistant à imprimer à chaud au moins une bande rugueuse s'étendant longitudinalement (16a, 16b, 16c) sur la surface intérieure d'au moins l'une desdites parois (12).
